# EUROPEAN PATENT SPECIFICATION

(11) **EP 3 603 599 B1**
(45) Date of publication and mention of the grant of the patent: **28.10.2020**
(21) Application number: 17903491.3
(22) Date of filing: 31.03.2017
(51) Int. Cl.: A61G 7/14, A61G 5/14, B25J 11/00, A61G 7/10

(54) **ASSISTANCE DEVICE**
ASSISTENZVORRICHTUNG
DISPOSITIF D'ASSISTANCE

(43) Date of publication of application: 05.02.2020
(73) Proprietor: Fuji Corporation, Chiryu-shi, Aichi 472-8686 (JP)
(72) Inventor: NOGUCHI, Takehiro, Chiryu-shi, Aichi 472-8686 (JP); ISOZUMI, Joji, Chiryu-shi, Aichi 472-8686 (JP); TAKAHASHI, Ryu, Chiryu-shi, Aichi 472-8686 (JP); NAKANE, Nobuyuki, Chiryu-shi, Aichi 472-8686 (JP)
(74) Representative: Grünecker Patent- und Rechtsanwälte PartG mbB
(86) International application number: PCT/JP2017/013830
(87) International publication number: WO 2018/179430

(56) References cited:
- WO-A1-2016/103497
- JP-A- 2011 050 539
- JP-A- 2012 040 251
- JP-A- 2012 045 068
- JP-A- 2014 064 635
- JP-A- 2015 112 255
- JP-A- 2016 093 504
- JP-A- 2016 144 628

## Description

### Technical Field

The present specification relates to an assistance device.

### Background Art

The need for assistance devices has increased with the aging of society. The introduction of assistance devices reduces the physical burden on the caregiver and the care receiver, and also alleviates the shortage of caregivers. As an example of an assistance device, there is a device configured to assist in boarding a care receiver onto the assistance device. This type of assistance device generally comprises a support section for supporting a part of the care receiver's body, and in particular often comprises a trunk support section for supporting the trunk of the care receiver. An example of a technique related to the trunk support section of an assistance device is disclosed in Patent Literature 1 and 2.

A boarding support device disclosed in Patent Literature 1 includes a trunk support section that abuts at least from the vicinity of the ilium of the care receiver to the vicinity of the clavicle to support the load of the care receiver vertically from below, and the center of the lower end portion of the trunk support section has a first protruding section protruding toward the care receiver. The trunk support section is formed by integrating an inner plate and a cushioning member. Further, it is disclosed that multiple types of trunk support sections may be prepared in accordance with the weight, height, and the like of the care receiver. As a result, the upper part of the chest and the iliac part of the care receiver are supported to reduce surface pressure applied to the chest and abdomen, thereby minimizing difficulties in breathing for the care receiver.

### Patent Literature

Patent Literature 1: JP-A-2014-64635 Patent Literature 2: JP-A-2012-40251

### Summary of the Invention

### Technical Problem

In the technical example of Patent Literature 1, in addition to the chest that has been supported conventionally, the abdomen that has not been conventionally supported is also supported, so that the surface area of the body to be supported increases and the surface pressure decreases. However, the first protruding section supporting the iliac part presses on the abdomen of the care receiver, unlike in previous cases. Therefore, the care receiver may feel a reduction in comfort in usage, such as feeling pressure on the abdomen upon making changes to one's posture or the like.

It is an object of the present specification to solve the problem of providing an assistance device which achieves comfort in usage by reducing the feeling of pressure on the abdomen or the like for the care receiver.

### Solution to Problem

The present specification discloses an assistance device comprising: a base; a trunk support section including a base plate configured to support a trunk of a care receiver, a sub-plate, having a bending rigidity lower that of the base plate and deformable by the weight of the care receiver, which is configured to support, compared to the base plate, a lower portion of the trunk of the care receiver, and a trunk contact member, which is provided on a support surface on the side of the base plate and the sub-plate facing the care receiver, the trunk support section being configured to move relative to the base while supporting the trunk of the care receiver; and a driving section configured to drive the trunk support section.

### Advantageous Effect of the Invention

With the assistance device disclosed herein, the base plate of the trunk support section supports the trunk of the care receiver and the sub-plate supports the lower portion of the trunk. Since the sub-plate is deformed following a postural change of the care receiver when the trunk support section moves, the sub-plate does not strongly press against the lower portion of the trunk of the care receiver. Thus, with a reduced feeling of pressure on the abdomen or the like, the care receiver feels comfortable using the assistance device.

### Brief Description of Drawings

[Fig. 1] A perspective view of an assistance device of an embodiment as viewed obliquely from the rear.
[Fig. 2] A side cross-sectional view of the assistance device cut through the centerline showing an initial state of an operation in which the assistance device assists the boarding of a care receiver.
[Fig. 3] A side cross-sectional view of the assistance device cut through the centerline showing the final state of the operation in which the assistance device assists the boarding of the care receiver.
[Fig. 4] A side cross-sectional view taken along the centerline of the trunk support section.
[Fig. 5] A side view showing a bending action of an extending portion of a sub-plate of the trunk support section.
[Fig. 6] A side cross-sectional view taken along the centerline of the trunk support section of a second modification of the embodiment.

### Description of Embodiments

### 1. Configuration of assistance device 1 of an embodiment

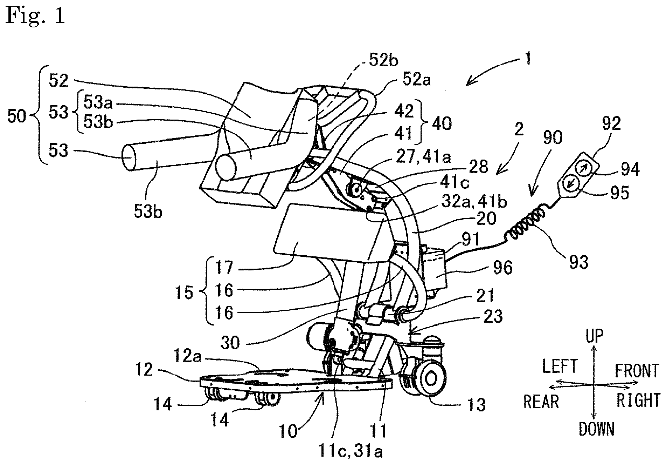

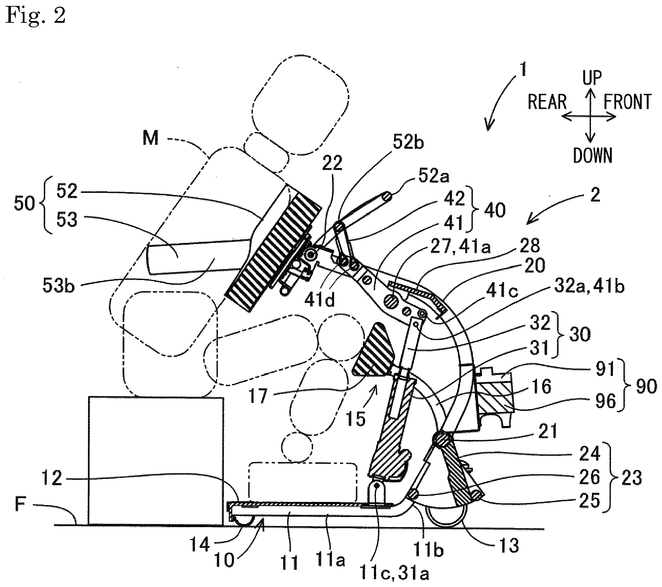

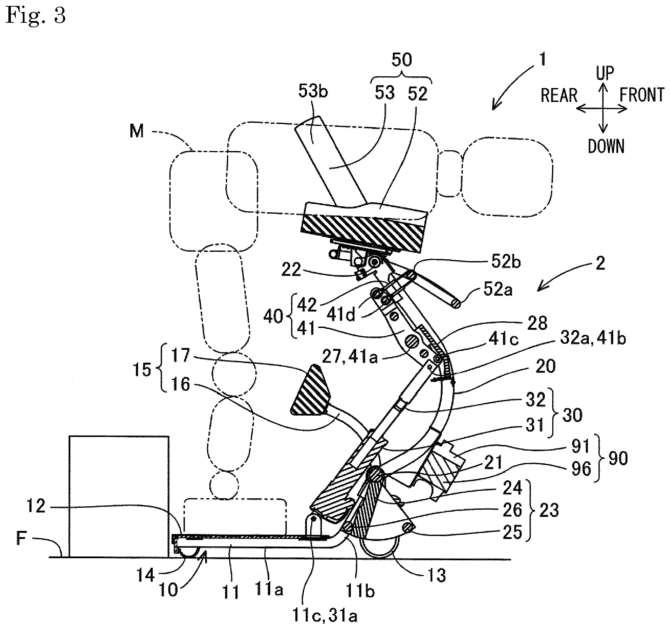

Assistance device 1 of the embodiment will be described with reference to Figs. 1 to 5. Fig. 1 is a perspective view of assistance device 1 of the embodiment as viewed obliquely from the rear. Fig. 2 is a side cross-sectional view taken along the centerline of assistance device 1 showing an initial state of an operation in which assistance device 1 assists the boarding of care receiver M. Further, Fig. 3 is a side cross-sectional view taken along the centerline of assistance device 1 showing a final state of the operation in which assistance device 1 assists the boarding of care receiver M.

Assistance device 1 assists in the transfer of care receiver M between two different places, for example, the transfer between a bed and a wheelchair or the transfer between a wheelchair and a toilet seat. Assistance device 1 supports the trunk of care receiver M and assists the boarding operation from a sitting posture to an in-transit posture and a seating operation from the in-transit posture to the sitting posture. Here, the in-transit posture is a posture in which the buttocks are separated from the seat surface and includes a standing posture and a stooping posture. That is, the in-transit posture includes a state in which the upper body is upright, a state in which the upper body is bent forward, and the like. Further, in cases where the two places between which transferring takes place are separated from each other, assistance device 1 can transfer care receiver M in the in-transit posture.

Assistance device 1 includes base 10, driving section 2, support section 50, control section 90, and the like. Driving section 2 includes arm 20, actuator 30, link mechanism 40, and the like. Driving section 2 moves support section 50 relative to base 10.

Base 10 is composed of frame 11, foot mount 12, front wheels 13, rear wheels 14, lower leg contact member 15, and the like. Frame 11 is composed of rear member 11a disposed horizontally and adjacent to floor F, and front member 11b extending obliquely upward forward from the front end of rear member 11a. Actuator support section 11c protrudes from the front of the upper face of rear member 11a. Foot mount 12 is fixed in an approximately horizontal orientation on the upper face of rear member 11a. On the upper face of foot mount 12, mark 12a for guiding the position on which care receiver M places his/her feet is drawn.

Two front wheels 13 are provided to front member 11b, and two rear wheels 14 are provided to rear member 11a. Steering functions of front wheels 13 and rear wheels 14 allow assistance device 1 to not only move straight and turn but also move sideways and spin in place. Further, front wheels 13 have a locking function for restricting movement. Lower leg contact member 15 is composed of a pair of support members 16 and cushion member 17. The pair of support members 16 are erected from front member 11b obliquely upward and rearward. Cushion member 17 is provided at the upper ends of support members 16. Cushion member 17 is positioned above foot mount 12 and comes in contact with the lower leg vicinity of care receiver M.

Arm 20 constituting driving section 2 is composed of two rod-shaped members or the like which are spaced apart and parallel to each other. The two rod-shaped members are coupled on the lower side using rocking shaft 21 and on the upper side using support shaft 22. Arm 20 has a curved shape or a bent shape in which the two rod-shaped members project forward. Link support section 27 is provided in the middle vicinity within the length of arm 20. Further, near link support section 27 of arm 20, restricting member 28 is provided roughly alongside the length of arm 20. Arm 20 pivots in the front-rear direction with rocking shaft 21, supported by front member 11b as the rocking shaft center.

Stopper mechanism 23 is provided to restrict the rocking angle of arm 20. Stopper mechanism 23 includes abutting section 24 fixed to the lower side of arm 20, and first stopper 25 and second stopper 26 fixed to front member 11b. Arm 20 swings from a state in which abutting section 24 abuts first stopper 25 in a rear position (shown in Fig. 2) to a state in which abutting section 24 abuts second stopper 26 in a front position (shown in Fig. 3).

Support section 50 is composed of trunk support section 52 and a pair of side support sections 53. Trunk support section 52 is swingably supported by support shaft 22 of arm 20. As a result, support section 50 pivots in the front-rear direction with support shaft 22 as the swinging axis. Trunk support section 52 includes handle 52a and locking section 52b. Handle 52a has a substantially rectangular frame shape. Handle 52a is a portion grasped by care receiver M and also a portion grasped by the caregiver to move assistance device 1. Locking section 52b is located in the central vicinity of the rectangular frame of handle 52a. Trunk support section 52 supports the area from the chest to the abdomen of the trunk of care receiver M.

The pair of side support sections 53 are attached to the right and left sides on the chest side of trunk support section 52. Each side support section 53 has an L-shape that bends at an obtuse angle. The short straight portion from the proximal end of each side support section 53, which is the attachment side, to the bending point becomes shoulder receiving section 53a, and the long straight portion from the bending point to the distal end becomes side entry section 53b. Shoulder receiving section 53a is positioned in approximately the same plane as trunk support section 52 and supports the front surface of the shoulder of care receiver M. Side entry section 53b gradually moves away from the plane, enters both sides of the trunk of care receiver M, and extends to the rear of care receiver M. The surface of each side support section 53 is covered with a cushioning material that is easy to deform and compress.

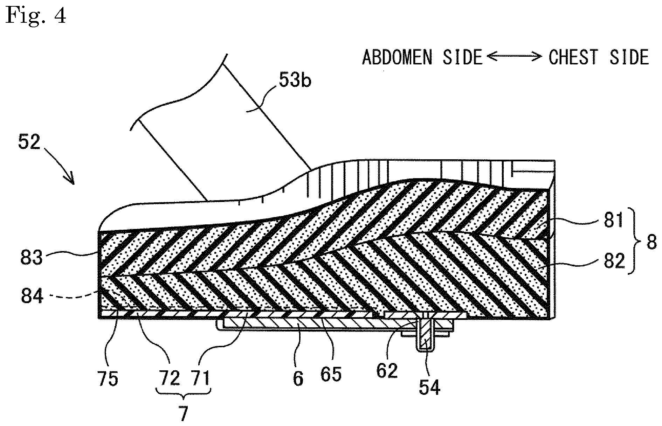

Fig. 4 is a side cross-sectional view of trunk support 52 taken along the centerline. The right side of Fig. 4 corresponds to the chest side of care receiver M, and the left side of Fig. 4 corresponds to the abdominal side of care receiver M. Trunk support section 52 has base plate 6, sub-plate 7, and trunk contact member 8. Base plate 6 is a substantially rectangular plate-like member in plan view. Base plate 6 is made of a metal plate material or the like and has high bending rigidity. The surface of base plate 6 on the side facing care receiver M serves as support surface 65. Base plate 6 can support the trunk of care receiver M. Even if a load caused by the weight of care receiver M acts on support surface 65 via trunk contact member 8, base plate 6 is hardly deformed.

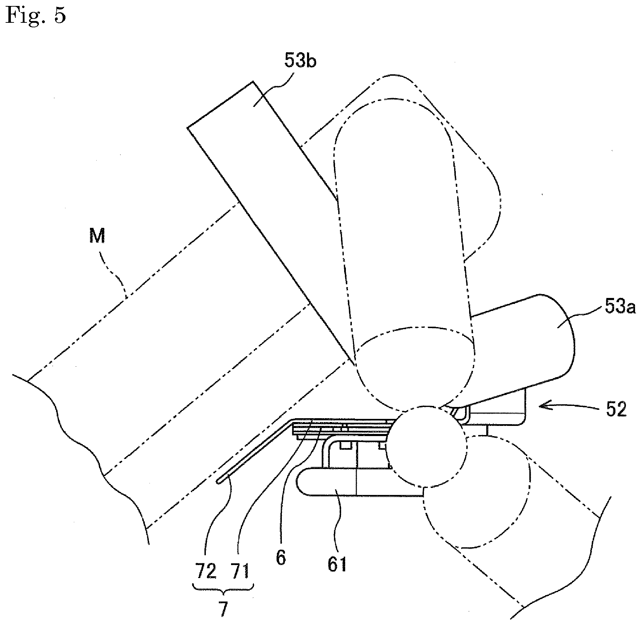

Handle 52a is fixed to base plate 6. Base plate 6 has supported section 61 (not shown in Fig. 4 but shown in Fig. 5) which is pivotally supported by support shaft 22 of arm 20. Further, base plate 6 has a pair of right and left holding holes 62 near the edge of the chest side. Each holding hole 62 holds coupling pin 54 coupled to the proximal end of side support section 53 in a rotatable and non-removable manner. As a result, side support section 53 swings with coupling pin 54 as an axis, and the angle formed with trunk support section 52 can be adjusted. Accordingly, when care receiver M rests on side support sections 53, side support sections 53 swings, thereby facilitating reclining. Further, with the swinging movement of side support sections 53, support section 50 is also able to accommodate differences in physique among multiple care receivers M.

Sub-plate 7 is a thin plate-like member. Sub-plate 7 is made of resin, for example, polycarbonate, and has a lower bending rigidity than base plate 6. The surface of sub-plate 7 on the side facing care receiver M serves as support surface 75. When a load caused by the weight of care receiver M acts on support surface 75 via trunk contact member 8, sub-plate 7 can deform. Overlapping portion 71 on the chest side of sub-plate 7 is disposed so as to overlap with supporting surface 65 of base plate 6. Extending portion 72 on the abdominal side of sub-plate 7 extends toward the abdominal side more than base plate 6. With this arrangement, compared to base plate 6, sub-plate 7 can support the lower side of the trunk of care receiver M. Specifically, when base plate 6 supports the chest of care receiver M, sub-plate 7 supports the abdomen of care receiver M.

The relative positions of sub-plate 7 and base plate 6 are not limited to the above. For example, in a first modification, overlapping portion 71 of sub-plate 7 is not directly overlapped with supporting surface 65 of base plate 6 but is directly overlapped with the other side, that is, the back surface of base plate 6. Further, a second modification in which support surface 75 of sub-plate 7 and support surface 65 of base plate 6 form a common surface will be described later.

Trunk contact member 8 is larger than base plate 6 and sub-plate 7, and is made of a material which is more flexible than sub-plate 7. Trunk contact member 8 has a two-layer structure including outer layer 81 and base layer 82. Outer layer 81 is disposed on the side closer to the trunk of care receiver M. Outer layer 81 has a curved shape that conforms to the front surface of the trunk of care receiver M and is made of a flexible material that can be easily deformed. Polyurethane foam having low resilience is an example of a material which can be used to form outer layer 81. Outer layer 81 is flexibly deformed to gently support the trunk of care receiver M. Outer layer 81 disperses the load caused by the weight of care receiver M. This equalizes the distribution of the load acting on support surface 65 of base plate 6 and support surface 75 of sub-plate 7.

On the other hand, base layer 82 is disposed on the side closer to base plate 6 and sub-plate 7. Base layer 82 and outer layer 81 may or may not be bonded to each other. Base layer 82 is made of material that is harder than outer layer 81 and harder to deform but is more flexible than sub-plate 7. Polyurethane foam having low combustibility is an example of a material which can be used to form base layer 82. Base layer 82 supports outer layer 81.

Trunk contact member 8 is housed and used in a storage cover 83. Storage cover 83 is formed in a double bag shape having sub-cover 84 on the inner side in contact with base plate 6. Sub-plate 7 is housed and used inside sub-cover 84. Storage cover 83 is detachably attached to support surface 65 of base plate 6 using, for example, a hook and loop fastener (not shown). Thus, sub-plate 7 and trunk contact member 8 are exchangeable.

Actuator 30 constituting driving section 2 is composed of main body section 31, movable section 32, a driving source (not shown), and the like. Movable section 32 moves linearly and protrudes out with respect to main body section 31, from a return position, via an intermediate position. The motor serving as a driving source drives movable section 32 via a power transmission mechanism such as a transmission gear (not shown). The driving source is not limited to this, and may be a pressure driving source that uses oil pressure or air pressure to linearly move movable section 32, which is equivalent to a piston. Base end 31a of main body section 31 is tiltably supported by actuator support section 11c of frame 11. As a result, actuator 30 tilts in the front-rear direction with actuator support section 11c as a pivot. Distal end 32a of movable section 32 engages with link mechanism 40.

Link mechanism 40 constituting driving section 2 is composed of first link member 41, second link member 42, and the like. First link member 41 is an elongated member made of metal, hard resin, or the like. First link member 41 has supported section 41a at the center, driven section 41b and roller 41c at one end, and connectors 41d at the other end. Supported section 41a is swingably supported by link support section 27 of arm 20. Driven section 41b is engaged with distal end 32a of movable section 32 of actuator 30. When movable section 32 further protrudes from the intermediate position, roller 41c is made to roll upon coming into contact with restricting member 28 of arm 20.

Second link member 42 connects connectors 41d of first link member 41 and locking section 52b of trunk support section 52. Second link member 42 is made of a material having flexibility, for example, rubber, elastomer, soft resin, hard resin in the form of a film, or the like. When connectors 41d and locking section 52b move away from each other, second link member 42 is in a coordinated state in which connectors 41d and locking section 52b are coordinated with each other. On the other hand, when connectors 41d and locking section 52b approach each other, second link member 42 permits a non-coordinated state in which connectors 41d and locking section 52b are not coordinated with each other.

Control section 90 includes control main body section 91 that operates by software, controller 92, battery power supply 96, and the like. Control main body section 91 and battery power supply 96 are fixed to the front side near the lower end of arm 20. Battery power supply 96 is shared by control main body section 91 and actuator 30. Controller 92 is connected to control main body section 91 using connection cord 93. Controller 92 may be communicatively connected to control main body section 91 using wireless communication. Operating device 92 is provided with up-button 94 and down-button 95. Control main body section 91 controls actuator 30 in accordance with the operation state of controller 92.

More specifically, while up-button 94 is pressed with a finger, control main body section 91 controls the lifting mode in which movable section 32 of actuator 30 protrudes from main body section 31. The lifting mode corresponds to assisting the boarding operation of lifting the buttocks of care receiver M. While down-button 95 is pressed with a finger, control main body section 91 controls the lowering mode in which movable section 32 of actuator 30 is returned to main body section 31. The lowering mode corresponds to assisting the seating operation of lowering the buttocks of care receiver M. When the finger is released from up-button 94 or down-button 95 to cancel the pressed state, control main body section 91 immediately stops the control. As a result, actuator 30 and support section 50 immediately stop, and a high degree of safety is ensured.

### 2. Operation of assistance device 1 of the embodiment

Next, the operation of assistance device 1 according to the embodiment will be described. In the following, assistance in the boarding operation of care receiver M will be described as an example. In this case, assistance device 1 operates from the initial state shown in Fig. 2 to the final state shown in Fig. 3. When assisting the seating operation of care receiver M, assistance device 1 operates in the reverse direction, in substantially the reverse order of the boarding operation.

First, the caregiver presses down-button 95 of controller 92 to return movable section 32 of actuator 30 to the return position shown in Fig. 2. Subsequently, the caregiver grasps handle 52a and moves assistance device 1 to toward care receiver M in the sitting posture. Care receiver M causes his/her lower body to enter the region between base 10 and support section 50. Further, care receiver M places both feet on mark 12a of foot mount 12. Care receiver M can obtain a stable posture by bringing a part of the lower leg into contact with cushion member 17 of lower leg contact member 15.

Subsequently, care receiver M tilts the trunk forward to bring the trunk into surface contact with trunk support section 52, and rests on side support sections 53 from both sides. At this time, since trunk support section 52 is rocked in the upright direction, the forward inclination angle of the body can be small. Further, since side entry sections 53b of side support sections 53 are approximately horizontal or slightly lowered in the rearward direction, care receiver M can easily rest on side support sections 53. At this time, care receiver M is in the initial posture. In the initial posture, the buttocks rest on the seat surface. The series of operations of care receiver M described above may be assisted by the caregiver.

Subsequently, the caregiver presses up-button 94 of controller 92 to cause movable section 32 to protrude out of main body section 31. While movable section 32 protrudes out from the return position to the intermediate position, roller 41c of first link member 41 is not yet in contact with restricting member 28. Therefore, first link member 41 is driven by movable section 32 to swing counterclockwise in Fig. 2. At the same time, actuator 30 tilts forward. Further, arm 20 maintains the rear position of the initial state. As first link member 41 pivots, support section 50 swings forward in conjunction with second link member 42. This operation is continued until movable section 32 reaches the intermediate position. As a result, care receiver M tilts the upper body further forward. At this time, since side entry sections 53b of side support sections 53 are lowered in the forward direction, care receiver M is restrained from moving backward and does not fall off from support section 50.

The caregiver continues to press up-button 94 of controller 92 to cause movable section 32 to further protrude out from main body section 31. When movable section 32 protrudes beyond the intermediate position, roller 41c comes into contact with restricting member 28 and the pivoting of first link member 41 ends. Thereafter, arm 20 is driven by movable section 32 to swing clockwise in Fig. 2. At the same time, actuator 30 tilts further forward. Connectors 41d and locking section 52b are coordinated with each other, and support section 50 maintains a constant orientation with respect to arm 20. This operation continues until the final state of Fig. 3, when arm 20 reaches the forward position. As a result, care receiver M tilts further forward while the buttocks move away from the seating surface and the upper body moves obliquely upward and forward. As a result, as shown in Fig. 3, care receiver M assumes an in-transit posture in which the buttocks are greatly elevated from the seat surface and the legs are extended.

### 3. Action and effect of assistance device 1 of the embodiment

Next, the operation and effect of assistance device 1 according to the embodiment will be described. Fig. 5 is a side view showing the deforming and bending action of extending portion 72 of sub-plate 7 of trunk support section 52. In Fig. 5, trunk contact member 8 and storage cover 83 are omitted. In the process of changing the posture of care receiver M from the initial posture (see Fig. 2) to the in-transit posture (see Fig. 3), the relative positions of the trunk of care receiver M and trunk support section 52 changes. For example, in the initial posture of Fig. 2, the trunk of care receiver M is approximately parallel to trunk support section 52. Also, in the in-transit posture shown in Fig. 3, the abdomen of care receiver M is closer to base plate 6 and sub-plate 7 than the chest.

In the initial posture, the load caused by the weight of care receiver M acts substantially equally on support surface 65 of base plate 6 and support surface 75 of sub-plate 7. At this time, a large load does not act on extending portion 72 of sub-plate 7, and extending portion 72 is hardly deformed. Further, a large surface pressure is not generated as a reaction force of the load in a specific portion of the trunk of care receiver M.

On the other hand, in the in-transit posture, much of the load caused by the weight of care receiver M acts on sub-plate 7. In particular, the load acting on extending portion 72 of sub-plate 7 from the abdomen of care receiver M becomes large. Therefore, as shown exaggerated in Fig. 5, extending portion 72 of sub-plate 7 deforms with respect to overlapping portion 71, and bends in a direction that avoids obstructing the abdomen of care receiver M. As a result, sub-plate 7 does not generate a large surface pressure on the abdomen of care receiver M. That is, sub-plate 7 does not strongly press against the abdomen of care receiver M. Therefore, care receiver M feels less pressure in the abdomen. This effect is not limited to the in-transit posture but also occurs in the intermediate posture before the in-transit posture and also occurs when care receiver M changes his/her posture with respect to trunk support section 52.

Further, since overlapping portion 71 of sub-plate 7 is disposed to overlap with support surface 65 of base plate 6, the abdominal end of base plate 6 is covered by sub-plate 7 and therefore does not press against care receiver M. Here, the first modification in which overlapping portion 71 of sub-plate 7 is directly overlapped with the back surface of base plate 6 is recalled. In the first modification, base plate 6 is disposed closer to care receiver M than sub-plate 7. When sub-plate 7 is bent, base plate 6 may cause the abdominal end to stay unchanged and therefore press strongly against the abdomen of care receiver M. Therefore, the present embodiment is superior to the first modification.

Furthermore, it is assumed that sub-plate 7 has a high bending rigidity and tends not to deform. In a comparative mode, much of the load caused by the weight of care receiver M acts in a concentrated manner on the unchanged abdominal end of sub-plate 7. As a result, a large surface pressure is generated in the abdomen of care receiver M. Therefore, care receiver M will feel a strong sense of pressure, and the comfort of use is lowered. The intense pressure sensation of the abdomen also occurs in the conventional mode with only base plate 6 without sub-plate 7. Therefore, the present embodiment is superior to the comparative mode and the conventional mode.

As described above, in the present embodiment, by using base plate 6, made of metal, and unchanged sub-plate 7, made of resin, in trunk support section 52, it is possible to eliminate the strong sensation of pressure on the abdomen of care receiver M and achieve comfort in use. Further, since sub-plate 7 can be exchanged, the thickness and material of sub-plate 7 can be changed in accordance with the physique and preference of care receiver M. For example, sub-plate 7 with a lower bending rigidity and more easily deformed can be used to accommodate care receiver M having an obese body type.

### 4. Second modification, other modifications, and applications

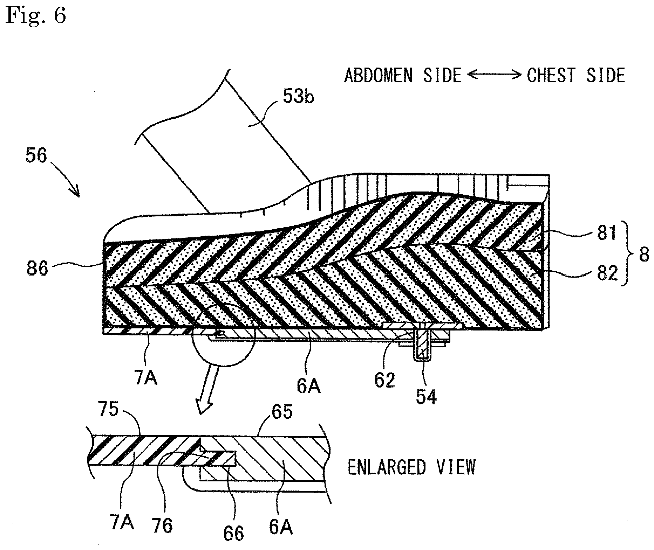

Instead of trunk support section 52 described above, trunk support section 56 shown in Fig. 6 can be used. Fig. 6 is a cross-sectional side view taken along the centerline of trunk support section 56 of the second modification. In the second modification, base plate 6A is made of metal and has fitting groove 66 at the abdominal end. On the other side, sub-plate 7A is made of plastic and has protrusion 76 at the chest end. Protrusion 76 of sub-plate 7A is fitted into and fixed to fitting groove 66 of base plate 6A. Support surface 65 of base plate 6A and support surface 75 of sub-plate 7A form a shared surface and have no step. Storage cover 86 has a single bag shape and accommodates trunk contact member 8.

In trunk support section 56 of the second modification, most of sub-plate 7A is deformed with respect to base plate 6A in the in-transit posture of care receiver M and is bent to avoid obstructing the abdomen of care receiver M. As a result, the same effect as that of trunk support section 52 of the embodiment is produced in trunk support section 56 of the second modification. Further, since support surface 65 of base plate 6A and support surface 75 of sub-plate 7A do not form a step in trunk support section 56, comfort of use is improved.

Driving section 2 of the embodiment uses one actuator 30 to first swing support section 50 and then swing arm 20, but the present invention is not limited to this. For example, the driving section may include multiple actuators or may slide the support section or the arm. Further, support section 50 may be formed with only a trunk support section (52, 56) and the pair of side support sections 53 may be omitted. Further, trunk contact member 8 need not have a two-layer structure and may be made with a single material. Various other modifications and applications of the embodiment, along with the first and second modifications, are possible.

### Reference Signs List

1: Assistance device, 2: Driving section, 10: Base, 20: Arm, 30: Actuator, 40: Link mechanism, 50: Support section, 52: Trunk support section, 53: Side support section, 53a: Shoulder receiving section, 53b: Side entry section, 56: Trunk support section, 6, 6A: Base plate, 65: Support surface, 66: Fitting groove, 7, 7A: Sub-plate, 71: Overlapping portion, 72: Extending portion, 75: Support surface, 76: Protrusion, 8: Trunk contacting member, 81: Outer layer, 82: Base layer, 83: Storage cover, 84: Sub-cover, 86: Storage cover, 90: Control section, M: Care receiver

## Claims

1. An assistance device comprising:
a base;
a trunk support section including
a base plate configured to support a trunk of a care receiver,
a sub-plate configured to support, compared to the base plate, a lower portion of the trunk of the care receiver, and
a trunk contact member, which is provided on a support surface on a side of the base plate and the sub-plate facing the care receiver, the trunk support section being configured to move relative to the base while supporting the trunk of the care receiver; and
a driving section configured to drive the trunk support section, **characterised by** the sub-plate having a bending rigidity lower that of the base plate and deformable by the weight of the care receiver.

2. The assistance device of claim 1, wherein the sub-plate is exchangeable.

3. The assistance device of claim 1 or 2, wherein at least a portion of the sub-plate is disposed over the support surface of the base plate.

4. The assistance device of any one of claims 1 to 3, wherein the base plate is made of metal and the sub-plate is made of resin.

5. The assistance device of any one of claims 1 to 4, wherein the sub-plate supports the abdomen of the care receiver when the base plate supports the chest of the care receiver.

## Patentansprüche

1. Assistenzvorrichtung, die umfasst:
einen Untersatz;
einen Rumpf-Auflageabschnitt, der enthält:
eine Trägerplatte, die so ausgeführt ist, dass sie einen Rumpf eines Pflegebedürftigen trägt,
eine Hilfsplatte, die so ausgeführt ist, dass sie im Vergleich zu der Trägerplatte einen unteren Abschnitt des Rumpfes des Pflegebedürftigen trägt, sowie
ein Rumpf-Kontaktelement, das an einer Auflagefläche an einer Seite der Trägerplatte und der Hilfsplatte vorhanden ist, die dem Pflegebedürftigen zugewandt ist, wobei der Rumpf-Auflageabschnitt so ausgeführt ist, dass er sich relativ zu dem Untersatz bewegt und dabei den Rumpf des Pflegebedürftigen trägt; sowie
einen Antriebsabschnitt, der so ausgeführt ist, dass er den Rumpf-Auflageabschnitt antreibt, **dadurch gekennzeichnet, dass** die Hilfsplatte eine Biegesteifigkeit hat, die schwächer ist als die der Trägerplatte, und sie durch das Gewicht des Pflegebedürftigen verformt werden kann.

2. Assistenzvorrichtung nach Anspruch 1, wobei die Hilfsplatte austauschbar ist.

3. Assistenzvorrichtung nach Anspruch 1 oder 2, wobei wenigstens ein Abschnitt der Hilfsplatte über der Auflagefläche der Trägerplatte angeordnet ist.

4. Assistenzvorrichtung nach einem der Ansprüche 1 bis 3, wobei die Trägerplatte aus Metall besteht und die Hilfsplatte aus Kunststoff besteht.

5. Assistenzvorrichtung nach einem der Ansprüche 1 bis 4, wobei die Hilfsplatte den Bauch des Pflegebedürftigen trägt, wenn die Trägerplatte den Brustkorb des Pflegebedürftigen trägt.

## Revendications

1. Dispositif d'assistance comprenant :
une base ;
une section de support du tronc comprenant une plaque de base configurée pour soutenir un tronc d'une personne bénéficiaire de soins,
une sous-plaque configurée pour soutenir, comparée à la plaque de base, une portion inférieure du tronc de la personne bénéficiaire de soins, et
un élément de contact avec le tronc, qui est disposé sur une surface de support sur un côté de la plaque de base et la sous-plaque faisant face à la personne bénéficiaire de soins, la section de support de tronc étant configurée pour se déplacer par rapport à la base tout en soutenant le tronc de la personne bénéficiaire de soins ; et
une section d'entraînement configurée pour entraîner la section de support du tronc, **caractérisée en ce que** la sous-plaque présente une rigidité à la flexion inférieure à celle de la plaque de base et déformable par le poids de la personne bénéficiaire de soins.

2. Dispositif d'assistance selon la revendication 1, la sous-plaque étant échangeable.

3. Dispositif d'assistance selon la revendication 1 ou 2, au moins une portion de la sous-plaque étant disposée sur la surface de support de la plaque de base.

4. Dispositif d'assistance selon l'une quelconque des revendications 1 à 3, la plaque de base étant constituée de métal et la sous-plaque étant constituée de résine.

5. Dispositif d'assistance selon l'une quelconque des revendications 1 à 4, la sous-plaque soutenant l'abdomen de la personne bénéficiaire de soins lorsque la plaque de base soutient la poitrine de la personne bénéficiaire de soins.
